# EUROPÄISCHE PATENTSCHRIFT

(11) **EP 2 643 124 B1**
(45) Veröffentlichungstag und Bekanntmachung des Hinweises auf die Patenterteilung: **21.03.2018**
(21) Anmeldenummer: 11781470.7
(22) Anmeldetag: 25.10.2011
(51) Int. Cl.: B23D 61/18, B28D 1/12, B24D 3/34

(54) **SCHNEIDELEMENTZUSAMMENSETZUNG MIT INTEGRIERTEM SCHMIERMITTEL**
CUTTING ELEMENT COMPOSITION COMPRISING AN INTEGRATED LUBRICANT
COMPOSITION D'UN ÉLÉMENT DE COUPE AVEC LUBRIFIANT INTÉGRÉ

(30) Priorität: 26.11.2010 DE 102010062066
(43) Veröffentlichungstag der Anmeldung: 02.10.2013
(73) Patentinhaber: Robert Bosch GmbH, 70442 Stuttgart (DE)
(72) Erfinder: MULONE, Roberto, CH-3924 St. Niklaus (CH)
(86) Internationale Anmeldenummer: PCT/EP2011/068615
(87) Internationale Veröffentlichungsnummer: WO 2012/069266

(56) Entgegenhaltungen:
- EP-A2- 0 071 022
- FR-A5- 2 149 833
- GB-A- 1 348 619

## Beschreibung

Die vorliegende Erfindung betrifft eine Zusammensetzung für ein Schneidelement, insbesondere eines Spanwerkzeugs, gemäß dem Oberbegriff des Anspruchs 1. Eine solche Zusammensetzung ist aus GB 1 348 619 A bekannt.

### Stand der Technik

Die Leistung und Eigenschaften (Performance) von Diamantwerkzeugen werden derzeit im Wesentlichen durch Optimieren der Zusammensetzung der Matrix-Schleifmittel-Zusammensetzung verbessert. Durch ein großes Volumen an großen Schleifmittelpartikeln kann beispielsweise die Schneidgeschwindigkeit erhöht werden. Dies geht jedoch auf Kosten der Lebensdauer des Werkzeugs. Andersherum kann durch ein großes Volumen an kleinen Schleifmittelpartikeln kann die Lebensdauer des Werkzeugs auf Kosten der Scheidgeschwindigkeit erhöht werden.

GB 1 348 619 beschreibt eine Schleifscheibe, die aus einem Verbund und Schleifelementen besteht, welche Schleifelemente Diamantkörner und/oder Bornitritkörner aufweisen, wobei der Verbund aus einem metallischen oder nichtmetallischen Bindungswirkstoff und einem oder mehreren Füllstoffen besteht, wobei zumindest ein Füllstoff in der Form von Körnern ist, die aus Graphit oder einem hauptsächlich Graphit-enthaltenen Material bestehen und die mit einer Metallbeschichtung versehen sind.

### Offenbarung der Erfindung

Gegenstand der vorliegenden Erfindung ist eine Zusammensetzung für ein Schneidelement, insbesondere eines Spanwerkzeugs, welche mindestens eine Matrixkomponente, mindestens eine Schleifmittelkomponente und mindestens ein Schmiermittelkomponente umfasst. Die Schmiermittelkomponente ist zumindest teilweise in Strukturen ausgebildet, welche jeweils eine Haftvermittlerbeschichtung aufweisen. Die Schmiermittelkomponente ist zumindest teilweise oder vollständig in Strukturen ausgebildet, welche ausgewählt sind aus der Gruppe bestehend aus stabförmigen Strukturen, plättchenförmigen Strukturen, gitterförmigen Strukturen und Mischungen davon. Insbesondere kann die Zusammensetzung zur Herstellung eines Schneidelements und/oder Spanwerkzeugs eingesetzt werden.

Durch das Schmiermittel kann vorteilhafterweise die Reibung reduziert werden. So kann wiederum die Effektivität des Schneidelements beziehungsweise Spanwerkzeugs erhöht sowie Vibrationen und Geräusche beim Spanen verringert werden. Zudem kann so Energie, die ansonsten beim Spanen zum Überwinden der Reibung benötigt wird, vorteilhafterweise eingespart werden. Darüber hinaus kann so vorteilhafterweise eine Überhitzung des Werkstücks und Werkzeugs vermieden werden. Die Schmiermittelkomponente ist zumindest teilweise oder vollständig in, insbesondere festen, Strukturen ausgebildet, welche jeweils eine Haftvermittlerbeschichtung aufweisen. Dabei sind die Strukturen teilweise oder vollständig mit der Haftvermittlerbeschichtung bedeckt. Der Haftvermittler kann insbesondere derart ausgewählt sein, dass er die Anbindung beziehungsweise Einbindung der Schmiermittelstruktur in die Matrixkomponente verbessert. So kann vorteilhafterweise vermieden werden, dass die Schmiermittelstrukturen beim Betrieb aus der Matrix herausgerissen werden.

Vorzugsweise ist die Haftvermittlerbeschichtung eine anorganische Haftvermittlerbeschichtung. Der Haftermittler kann beispielsweise ausgewählt sein aus der Gruppe bestehend aus Metallen, Metalllegierungen/vorlegierungen/mischungen, anorganischen Verbindungen, und Mischungen davon.

Der Haftvermittler kann beispielsweise ausgewählt sein aus der Gruppe bestehend aus metallischem Titan, Nickel und/oder Silber, Legierungen/Vorlegierungen/Mischungen von Titan, Nickel und/oder Silber, anorganischen Materialien, insbesondere auf Carbid- und/oder Nitrid-Basis, beispielsweise Carbiden und/oder Nitriden von Titan und/oder Wolfram, und Mischungen davon. Zum Beispiel kann die Schmiermittelkomponente in Form von Graphitstrukturen ausgebildet sein, welche eine Haftvermittlerbeschichtung aus Nickel aufweisen, oder die Schmiermittelkomponente kann in Form von Strukturen aus hexagonalem Bornitrid ausgebildet sein, welche eine Haftvermittlerbeschichtung aus Titan- und/oder Silber aufweisen.

Die Haftvermittlerbeschichtung kann beispielsweise eine durchschnittliche Schichtdicke in einem Bereich von ≥ 1 µm bis ≤ 50 µm, zum Beispiel von ≥ 1 µm bis ≤ 20 µm, aufweisen. Die Schmiermittelkomponente ist zumindest teilweise oder vollständig in Strukturen ausgebildet, welche ausgewählt sind aus der Gruppe bestehend aus stabförmigen Strukturen, plättchenförmigen Strukturen, gitterförmigen Strukturen und Mischungen davon. Insbesondere können dabei die Schmiermittelstrukturen mit der Haftvermittlerbeschichtung zumindest teilweise oder vollständig als Strukturen ausgebildet sein, welche ausgewählt sind aus der Gruppe bestehend aus sphärischen Strukturen, stabförmigen Strukturen, plättchenförmigen Strukturen, gitterförmigen Strukturen und Mischungen davon. Mit anderen Worten, die Schmiermittelkomponente kann zumindest teilweise oder vollständig in stabförmigen Strukturen, plättchenförmigen Strukturen, gitterförmigen Strukturen oder einer Mischung dieser Strukturen ausgebildet sein, welche jeweils eine Haftvermittlerbeschichtung aufweisen. Zusätzlich dazu kann die Schmiermittelkomponente zumindest teilweise oder vollständig in Strukturen (ohne Haftvermittlerbeschichtung) ausgebildet sein, welche ausgewählt sind aus der Gruppe bestehend aus sphärischen Strukturen, stabförmigen Strukturen, plättchenförmigen Strukturen, gitterförmigen Strukturen und Mischungen davon.

Unter sphärischen Strukturen können insbesondere Strukturen, welche in alle Raumrichtungen eine im Wesentlichen gleich große Ausdehnung aufweisen, zum Beispiel im Wesentlichen kugelförmige Strukturen, verstanden werden. Die sphärischen Strukturen können beispielsweise eine durchschnittliche Partikelgröße in einem Bereich von ≥ 1 µm bis ≤ 500 µm, zum Beispiel von ≥ 100 µm bis ≤ 500 µm oder von ≥ 150 µm bis ≤ 500 µm, aufweisen.

Unter stabförmigen Strukturen können insbesondere Strukturen verstanden werden, welche in eine erste Raumrichtung eine größere Ausdehnung aufweisen als in die zweite und dritte Raumrichtung. Als stabförmige Strukturen können neben zylindrischen Strukturen auch unregelmäßige oder symmetrische, längliche Polyeder verstanden werden. Die stabförmigen Strukturen können beispielsweise eine durchschnittliche Länge in einem Bereich von ≥ 0,1 mm bis ≤ 25 mm, zum Beispiel von ≥ 3 mm bis ≤ 25 mm, beispielsweise von ≥ 8 mm bis ≤ 10 mm, und/oder eine durchschnittliche Querschnittsfläche in einem Bereich von ≥ 0,001 mm² bis ≤ 5 mm², zum Beispiel von ≥ 0,005 mm² bis ≤ 5 mm², beispielsweise von ≥ 0,1 mm² bis ≤ 2 mm², und/oder ein durchschnittliches Volumen in einem Bereich von ≥ 0,015 mm³ bis ≤ 125 mm³, zum Beispiel von ≥ 0,015 mm³ bis ≤ 125 mm³, beispielsweise von ≥ 0,015 mm³ bis ≤ 125 mm³ oder von ≥ 0,1 mm³ bis ≤ 10 mm³, aufweisen.

Unter plättchenförmigen Strukturen können insbesondere Strukturen verstanden werden, welche in zwei Raumrichtungen eine größere Ausdehnung aufweisen als in die dritte Raumrichtung. Die plättchenförmigen Strukturen können dabei sowohl ebene, im Wesentlichen regelmäßige Körper, beispielsweise Prismen oder Quader geringer Höhe, als auch gewölbte und/oder unregelmäßige Körper, beispielsweise ähnlich einer gewölbten Folie, einer Flocke (eines Cornflakes) oder einer Schuppe, sein. Die plättchenförmigen Strukturen können beispielsweise eine durchschnittliche Fläche in einem Bereich von ≥ 1 mm² bis ≤ 300 mm², zum Beispiel von ≥ 20 mm² bis ≤ 300 mm², beispielsweise von ≥ 50 mm² bis ≤ 125 mm², und/oder eine durchschnittliche Dicke in einem Bereich von ≥ 0,01 mm bis ≤ 0,5 mm, beispielsweise von ≥ 0,1 mm bis ≤ 0,3 mm, aufweisen. Beispielsweise können die plättchenförmigen Strukturen aus Graphit ausgebildet sein.

Unter gitterförmigen Strukturen können sowohl regelmäßige, ebene als auch unregelmäßige und/oder gewölbte Gitter verstanden werden. Dabei können auch Gitter, die mehr als vier von einem Verknüpfungspunkt ausgehende Gitterstreben aufweisen, als Gitter verstanden werden. Die gitterförmigen Strukturen können beispielsweise eine durchschnittliche Gesamtgitterfläche in einem Bereich von ≥ 1 mm² bis ≤ 300 mm², zum Beispiel von ≥ 20 mm² bis ≤ 300 mm², beispielsweise von ≥ 50 mm² bis ≤ 125 mm², und/oder die durchschnittliche Gitterdicke in einem Bereich von ≥ 0,01 mm bis ≤ 0,5 mm, beispielsweise von ≥ 0,1 mm bis ≤ 0,3 mm, aufweisen.

Im Rahmen einer weiteren Ausführungsform ist die Schmiermittelkomponente zumindest teilweise oder vollständig in plättchenförmigen Strukturen ausgebildet, welche jeweils eine oder mehrere Perforationen aufweisen. Wird eine derartig ausgebildete Schmiermittelkomponente von der Matrixkomponente umgeben und die Zusammensetzung, beispielsweise durch Pressen verfestigt, so können Matrixkomponentenbereiche, welche jeweils an gegenüberliegende Seiten der plättchenförmigen Schmiermittelstruktur angrenzen, durch die Perforationen miteinander verbunden werden und die so vorteilhafterweise die Festigkeit des herzustellenden Schneidelements erhöht werden. Eine gitterförmige Struktur ist ein Spezialfall dieser Ausgestaltung. Die Perforationen können beispielsweise durchschnittlich ≥ 5 % bis ≤ 50 %, beispielsweise von ≥ 10 % bis ≤ 35 %, der Fläche einer plättchenförmigen Struktur ausmachen. Eine Perforation kann dabei beispielsweise eine durchschnittliche Fläche in einem Bereich von ≥ 0,4 mm² bis ≤ 15 mm², beispielsweise von ≥ 1 mm² bis ≤ 10 mm², aufweisen.

Im Rahmen einer weiteren Ausführungsform ist die Schmiermittelkomponente ausgewählt aus der Gruppe, bestehend aus anorganischen Schmiermitteln, wie Nitriden, Sulfiden, Fluoriden, Sulfaten, Oxiden, Carbiden, Iodiden und/oder Boraten von Bor (h-BN), Wolfram, Molybdän, Calcium, Barium, Magnesium, Strontium, Cäsium, Natrium, Kalium, Titan, Silicium, Cer, Silber und/oder Mangan, Kohlenstoffmodifikationen, wie Graphit, Graphen und/oder Kohlenstoffnanoröhren, organischen Schmiermitteln, wie Polyhalogenolefinen, Ölen (pflanzlichen, tierischen, mineralischen und/oder synthetischen Ölen), Fetten (pflanzlichen, tierischen, mineralischen und/oder synthetischen Fetten) und/oder Wachsen (pflanzlichen, tierischen, mineralischen und/oder synthetischen Wachsen), und Mischungen davon. Zum Beispiel kann die Schmiermittelkomponente ausgewählt sein aus der Gruppe, bestehend aus hexagonalem Bornitrid (h-BN), Kohlenstoffmodifikationen, wie Graphit, Wolframsulfid (WS₂), Molybdänsulfid (MoS₂), Calciumfluorid (CaF₂), Bariumsulfid (BaF₂), Calciumsulfat (CaSO₄), Bariumsulfat (BaSO₄), Cäsiummolybdänoxidsulfid (CsMoOS₃), Titansiliciumcarbid (Ti₃SiC₂), Cerfluorid (CeF₃), Silberiodid (AgI), Mangansulfid (MnS), Natriumborat (Na₂B₄O₇ 10 H₂O), Polytetrafluorethylen (PTFE, Teflon), Ölen, Fetten, Wachsen und Mischungen davon. Beispielsweise kann das Schmiermittel eine Calciumfluorid-Bariumfluorid-Mischung umfassen, welche zum Beispiel 38 Gew.-% Calciumfluorid und 62 Gew.-% Bariumfluorid, bezogen auf das Gesamtgewicht der Calciumfluorid-Bariumfluorid-Mischung, umfasst.

Weiterhin kann die Zusammensetzung mindestens eine, insbesondere organische, Bindemittelkomponente umfassen. Mit Hilfe der Bindemittelkomponente kann die Zusammensetzung in eine granulierte Form überführt werden. Granulate können gegenüber Pulvern, Vorteile bei der Herstellung, insbesondere beim Pressen, des Schneidelements aufweisen. Herkömmlicherweise wird die Bindemittelkomponente bei der weiteren Prozessierung während der Herstellung des Schneidelements zersetzt, so dass das fertige Schneidelement die Bindemittelkomponente nicht mehr oder nur noch in Spuren aufweist.

Die Matrixkomponente kann in der Zusammensetzung als Pulver oder als Granulat, insbesondere in Kombination mit der Bindemittelkomponente und/oder der Schmiermittelkomponente und/oder der Schleifmittelkomponente, vorliegen. Zum Beispiel kann die Matrixkomponente in der Zusammensetzung in Form eines Pulvers oder Granulats aus im Wesentlichen sphärischen Strukturen vorliegen.

Die Matrixkomponente kann sowohl eine anorganische Matrixkomponente als auch eine organische Matrixkomponente, beispielsweise auf der Polymerbasis, sein. Kohlenstoffverbindungen, welche keine Kohlenstoff-Wasserstoff-Bindung aufweisen, insbesondere Carbide und Kohlenstoffmodifikationen, wie Graphit, Graphen, Kohlenstoffnanoröhren, können im Sinn der vorliegenden Erfindung als anorganisch verstanden werden.

Im Rahmen einer weiteren Ausführungsform ist die Matrixkomponente eine anorganische Matrixkomponente. Insbesondere kann die Matrixkomponente ausgewählt sein aus der Gruppe bestehend aus Metallen, Metall-Legierungen/- vorlegierungen (Englisch: pre-alloy)/-mischungen, anorganischen Verbindungen, und Mischungen davon. Schneidelemente mit einer anorganischen Matrixkomponente können - verglichen mit Schneidelementen mit einer organischen Matrixkomponente - vorteilhafterweise eine längere Lebensdauer aufweisen.

Im Fall von anorganischen Matrixkomponenten ist die Schmiermittelkomponente vorzugsweise ausgewählt aus der Gruppe, bestehend aus anorganischen Schmiermitteln, wie Nitriden, Sulfiden, Fluoriden, Sulfaten, Oxiden, Carbiden, Iodiden und/oder Boraten von Bor (h-BN), Wolfram, Molybdän, Calcium, Barium, Magnesium, Strontium, Cäsium, Natrium, Kalium, Titan, Silicium, Cer, Silber und/oder Mangan, Kohlenstoffmodifikationen, wie Graphit, Graphen und/oder Kohlenstoffnanoröhren, und Mischungen davon. Anorganische Schmiermittel haben sich in Kombination mit anorganischen Matrixmaterialien als vorteilhaft erwiesen, da diese unter den Verarbeitungsbedingungen für anorganische Matrixmaterialien eine höhere Beständigkeit aufweisen.

Im Rahmen einer weiteren Ausführungsform ist die Matrixkomponente ausgewählt aus der Gruppe, bestehend aus metallischem Kupfer, Zinn, Eisen, Cobalt, Nickel, Titan, Chrom, Wolfram und/oder Mangan, Metalllegierungen/vorlegierungen/mischungen von Kupfer, Zinn, insbesondere Bronze, Eisen, Cobalt, Nickel, Titan, Chrom, Wolfram und/oder Mangan, anorganischen Verbindungen von Titan, Chrom, Wolfram und/oder Mangan und Mischungen davon. Zum Beispiel kann die Zusammensetzung, bezogen auf das Gesamtgewicht der Matrixkomponenten, ≥ 28 Gew.-% bis ≤ 75 Gew.-%, beispielsweise ≥ 28 Gew.-% bis ≤ 72 Gew.-%, einer ersten Matrixkomponente umfassen, welche ausgewählt ist aus der Gruppe, bestehend aus metallischem Kupfer, Zinn, insbesondere Bronze, Eisen, Cobalt und/oder Nickel, Metalllegierungen/vorlegierungen/mischungen von Kupfer, Zinn, insbesondere Bronze, Eisen, Cobalt und/oder Nickel, und Mischungen davon. Alternativ oder zusätzlich dazu kann die Zusammensetzung, bezogen auf das Gesamtgewicht der Matrixkomponenten, ≥ 2 Gew.-% bis ≤ 20 Gew.-%, beispielsweise ≥ 2,8 Gew.-% bis ≤ 18 Gew.-%, einer zweiten Matrixkomponente umfassen, welche ausgewählt ist aus der Gruppe, bestehend aus anorganischen Verbindungen von Titan, Chrom, Wolfram und/oder Mangan und Mischungen davon.

Die Schleifmittelkomponente kann in der Zusammensetzung ebenfalls als Pulver oder Granulat, insbesondere in Kombination mit der Bindemittelkomponente und/oder der Matrixkomponente und/oder der Schmiermittelkomponente, vorliegen. Zum Beispiel kann die Schleifmittelkomponente in der Zusammensetzung in Form eines Pulvers oder Granulats aus im Wesentlichen sphärischen Strukturen vorliegen.

Im Rahmen einer weiteren Ausführungsform ist die Schleifmittelkomponente ausgewählt aus der Gruppe, bestehend aus Diamant, kubischem Bornitrid (c-BN), Wolframcarbid, Titancarbid, Titannitrid, Siliciumcarbid und Mischungen davon, wie Titanwolframcarbide (TiₓW_{y}C_{z}) oder Titancarbidnitride (TiCₐN_{b}), insbesondere Diamant (synthetischem oder natürlichem).

Die Zusammensetzung kann beispielsweise
- ≥ 30 Gew.-% bis ≤ 95 Gew.-%, beispielsweise ≥ 30 Gew.-% bis ≤ 90 Gew.-%, an Matrixkomponenten, und/oder
- ≥ 2 Gew.-% bis ≤ 20 Gew.-%, beispielsweise ≥ 3 Gew.-% bis ≤ 15 Gew.-%, an Schleifmittelkomponenten, und/oder
- ≥ 1 Gew.-% bis ≤ 30 Gew.-%, beispielsweise ≥ 2 Gew.-% bis ≤ 20 Gew.-%, an Schmiermittelkomponenten, und/oder
- ≥ 1 Gew.-% bis ≤ 30 Gew.-%, beispielsweise ≥ 2 Gew.-% bis ≤ 20 Gew.-%, an Haftvermittlern,
- ≥ 0 Gew.-% bis ≤ 10 Gew.-%, beispielsweise ≥ 0,1 Gew.-% bis ≤ 5 Gew.-%, an Bindemittelkomponenten,
bezogen auf das Gesamtgewicht der Zusammensetzung, umfassen. Dabei können die Gewichtsprozentwerte der Matrixkomponenten und/oder Schleifmittelkomponenten und/oder Schmiermittelkomponenten und/oder der Haftvermittler und/oder der Bindemittelkomponenten insbesondere in Summe 100 Gewichtsprozent ergeben.

Im Rahmen einer weiteren Ausführungsform umfasst die Zusammensetzung
- ≥ 30 Gew.-% bis ≤ 95 Gew.-%, beispielsweise ≥ 30 Gew.-% bis ≤ 90 Gew.-%, an Matrixkomponenten,
- ≥ 2 Gew.-% bis ≤ 20 Gew.-%, beispielsweise ≥ 3 Gew.-% bis ≤ 15 Gew.-%, an Schleifmittelkomponenten,
- ≥ 1 Gew.-% bis ≤ 30 Gew.-%, beispielsweise ≥ 2 Gew.-% bis ≤ 20 Gew.-%, an Schmiermittelkomponenten, und
- ≥ 1 Gew.-% bis ≤ 30 Gew.-%, beispielsweise ≥ 2 Gew.-% bis ≤ 20 Gew.-%, an Haftvermittlern,
bezogen auf das Gesamtgewicht der Zusammensetzung. Insbesondere kann die Zusammensetzung aus diesen Komponenten zumindest im Wesentlichen bestehen. Dabei können die Gewichtsprozentwerte der Matrixkomponenten, Schleifmittelkomponenten, Schmiermittelkomponenten und der Haftvermittler insbesondere in Summe 100 Gewichtsprozent ergeben. Eine derartige Zusammensetzung hat sich für Schneidelemente mit Haftvermittler beschichteten Schmiermittelstrukturen als vorteilhaft erwiesen.

Ein weiterer Gegenstand der vorliegenden Erfindung ist ein Verfahren zur Herstellung eines Schneidelements oder eines Spanwerkzeugs gemäß dem Anspruch 9. Das Verfestigen der Zusammensetzung kann dabei direkt auf einem Trägerkörper, beispielsweise einem metallischen oder keramischen Trägerkörper, zum Beispiel einem Trägerkörper aus Stahl, des herzustellenden Spanwerkzeugs erfolgen. So kann das Schneidelement in einem Verfahrensschritt hergestellt und mit dem Trägerkörper verbunden werden. Insbesondere kann dies mittels Kaltverfestigen erfolgen.

Es ist jedoch ebenso möglich zuerst das Schneidelement, beispielsweise durch Warmverfestigen, herzustellen, und gegebenenfalls, beispielsweise unter Atmosphärendruck, zu Sintern. Danach kann das Schneidelement mit dem Trägerkörper verbunden werden. Im Rahmen einer Ausgestaltung umfasst das Verfahren daher nach dem Verfahrensschritt des Verfestigens den Verfahrensschritt des Sinterns der verfestigten Zusammensetzung.

Ein weiterer Gegenstand der vorliegenden Erfindung ist ein Verfahren zur Herstellung eines Schneidelements oder Spanwerkzeugs, umfassend die Verfahrensschritte
- Verfestigen, insbesondere Kaltverfestigen und/oder Warmverfestigen, beispielsweise Kalt- und/oder Heißpressen, einer Zusammensetzung gemäß dem Anspruch 1,
- Entfernen der Hohlraumbildungskomponenten, und
- Füllen der erzeugten Hohlräume mit mindestens einer, beispielsweise vorstehend beschriebenen, Schmiermittelkomponente.

In der Zusammensetzung können dabei, insbesondere feste, Schmiermittelstrukturen enthalten sein.

Die Hohlraumbildungskomponente kann beispielsweise ein Treibgas sein. In diesem Fall kann das Verfestigen und Entfernen im Wesentlichen gleichzeitig erfolgen. Die Hohlraumbildungskomponente kann jedoch auch ein Material sein, welches bei den Verfestigungsbedingungen zumindest im Wesentlichen stabil ist (und als Platzhalter fungiert) und welches im nachfolgenden Verfahrensschritt des Entfernens in einen anderen Aggregatzustand, beispielsweise flüssig (schmelzen) oder gasförmig, überführt oder zersetzt wird. Beispielsweise kann die Hohlraumbildungskomponente ein Polymer, zum Beispiel Polyethylen oder Polypropylen, sein, welches durch thermische Zersetzung entfernt wird.

Insbesondere können Hohlräume wie Kanälen und/oder Poren, beispielsweise ein Kanal- und/oder Porennetzwerks, zum Beispiel ein offenporiges Kanal- und/oder Porennetzwerk, erzeugt werden.

Das Füllen der erzeugten Hohlräume erfolgt vorzugsweise durch ein Infiltrationsverfahren. Beispielsweise können die Hohlräume, insbesondere ein offenporiges Kanal- und/oder Porennetzwerk, insbesondere im resultierenden Matrix-Schleifpartikel-Verbund, mit einer pastösen oder flüssigen Schmiermittelkomponente, insbesondere einer Schmiermittelschmelze, beispielsweise auf der Basis eines Öls, Fetts, Wachs, Metalls oder einer Metalllegierung teilweise oder vollständig infiltriert und/oder gefüllt werden. Nach der Infiltration kann sich ein als Schmelze infiltriertes Schmiermittel in den Hohlräumen verfestigen.

Stab-, gitter-, netzwerk- und/oder plättchenförmigen Strukturen können beispielsweise dadurch realisiert werden, dass in der Matrix ein oder mehrere Kanäle und/oder Poren ausgebildet sind, welche teilweise oder vollständig mit der Schmiermittelkomponente gefüllt sind. Auf diese Weise kann ein Schneidelement mit einer oder mehreren stabförmige, gitterförmige und/oder netzwerkförmige Schmiermittelstruktur hergestellt werden.

Ein Schneidelement mit einer oder mehreren stabförmigen Schmiermittelstrukturen kann alternativ dazu dadurch hergestellt werden, dass eine stabförmige Hohlraumausbildungskomponente eingesetzt wird und in den resultierenden stabförmigen Hohlraum beziehungsweise Kanal die stabförmige Schmiermittelstruktur eingeschoben wird.

Das Verfestigen der Zusammensetzung kann direkt auf einem Trägerkörper, beispielsweise einem metallischen oder keramischen Trägerkörper, zum Beispiel einem Trägerkörper aus Stahl, des herzustellenden Spanwerkzeugs erfolgen. So kann das Schneidelement in einem Verfahrensschritt hergestellt und mit dem Trägerkörper verbunden werden. Insbesondere kann dies mittels Kaltverfestigen erfolgen.

Es ist jedoch ebenso möglich zuerst das Schneidelement, beispielsweise durch Warmverfestigen, herzustellen, und gegebenenfalls, beispielsweise unter Atmosphärendruck, zu Sintern. Danach kann das Schneidelement mit dem Trägerkörper verbunden werden. Im Rahmen einer Ausgestaltung umfasst das Verfahren daher den Verfahrensschritt des Sinterns der verfestigten Zusammensetzung.

Ein weiterer Gegenstand der vorliegenden Erfindung ist ein weiteres Verfahren zur Herstellung eines Schneidelements oder Spanwerkzeugs, umfassend die Verfahrensschritte
- Bereitstellen eines ersten Bereichs aus einer Zusammensetzung gemäß dem Anspruch 1, welche
   - mindestens eine, beispielsweise vorstehend beschriebene, Matrixkomponente zum Erzeugen einer Matrix und
   - mindestens eine, beispielsweise vorstehend beschriebene, Schleifmittelkomponente,
   umfasst,
   - Aufbringen von einer oder mehreren, beispielsweise stabförmigen, plättchenförmigen oder gitterförmigen, Schmiermittelstrukturen, beispielsweise aus einer oder mehreren der vorstehend beschriebenen Schmiermittelkomponenten, auf den ersten Bereich;
   - Aufbringen eines zweiten Bereichs aus einer Zusammensetzung gemäß dem Anspruch 1, welche
      - mindestens eine, beispielsweise vorstehend beschriebene, Matrixkomponente zum Erzeugen einer Matrix und
      - mindestens eine, beispielsweise vorstehend beschriebene, Schleifmittelkomponente
   umfasst, auf den ersten Bereich und die darauf aufgebrachten Schmiermittelstrukturen,
   - Verfestigen, insbesondere Kaltverfestigen und/oder Warmverfestigen, beispielsweise Kalt- und/oder Heißpressen, der Anordnung.

So können die Schmiermittelstrukturen sandwichartig in die Schleifpartikel aufweisende Matrix eingebracht werden.

In den Zusammensetzungen können dabei, insbesondere feste, Schmiermittelstrukturen enthalten sein.

Während oder nach den einzelnen Bereitstellungs- beziehungsweise Aufbringungsverfahrensschritten kann das Verfahren Zwischenschritte aufweisen, in denen die zu diesem Zeitpunkt vorliegende Anordnung, beispielsweise durch Kaltverfestigen und/oder Warmverfestigen, insbesondere Kalt- und/oder Heißpressen, teilweise verfestigt wird.

Auf diese Weise können vorteilhafterweise feste Schmiermittelstrukturen direkt in die Schleifpartikel aufweisende Matrix eingebracht und positioniert werden. Das Positionieren der Hohlraumausbildungskomponente in dem zuvor erläuterten Verfahren kann analog erfolgen.

Auch im Rahmen dieses Verfahrens kann das Verfestigen der Zusammensetzung direkt auf einem Trägerkörper, beispielsweise einem metallischen oder keramischen Trägerkörper, zum Beispiel einem Trägerkörper aus Stahl, des herzustellenden Spanwerkzeugs erfolgen. Auf diese Weise kann das Schneidelement in einem Verfahrensschritt hergestellt und mit dem Trägerkörper verbunden werden. Insbesondere kann dies mittels Kaltverfestigen erfolgen.

Es ist jedoch auch im Rahmen dieses Verfahrens ebenso möglich zuerst das Schneidelement, beispielsweise durch Warmverfestigen, herzustellen, und gegebenenfalls, beispielsweise unter Atmosphärendruck, zu Sintern. Danach kann das Schneidelement mit dem Trägerkörper verbunden werden. Im Rahmen einer Ausgestaltung umfasst das Verfahren daher den Verfahrensschritt des Sinterns der verfestigten Zusammensetzung.

Unter einem Schneidelement kann im Sinn der vorliegenden Erfindung insbesondere ein Element eines Spanwerkzeugs, wie eines Sägeblatts, einer Trennscheibe, eines Bohrers, eines Senkers, einer Fräse, einer Ahle, eines Meißels, einer Schleifscheibe, eines Schleiftellers, eines Schleifklotzes, eines Schleifbandes, einer Schleifwalze, einer Feile, einer Raspel, einer Reibe oder eines Hobels, verstanden werden, welches zum Spanen des Werkstücks vorgesehen ist.

Im Rahmen einer Ausführungsform ist das Schneidelement ein Schneidsegment, ein Schneidrand, beispielsweise ein geschlossener/ebener Schneidrand oder ein strukturierter Schneidrand, so genannter Turbo-Schneidrand, eine Schneidlippe, beispielsweise eines Bohrers, eine Schneidspitze, oder ein Schneidbelag.

Im Rahmen einer weiteren Ausführungsform weist das Spanwerkzeug einen Trägerkörper auf, mit welchem das mindestens eine Schneidelement verbunden ist.

Im Rahmen einer weiteren Ausführungsform ist das Spanwerkzeug ein Sägeblatt, eine Trennscheibe, ein Bohrer, ein Senker, eine Fräse, eine Ahle, ein Meißel, eine Schleifscheibe, ein Schleifteller, ein Schleifklotz, ein Schleifband, eine Schleifwalze, eine Feile, eine Raspel, eine Reibe oder ein Hobel.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch ein Schneidelement, in dessen Matrix Schleifmittelpartikel und sphärische Schmiermittelstrukturen eingebunden sind;
- Fig. 2: einen schematischen Querschnitt durch ein Schneidelement, in dessen Matrix Schleifmittelpartikel und sphärische Schmiermittelstrukturen mit einer Haftvermittlungsbeschichtung eingebunden sind;
- Fig. 3a: einen schematischen Querschnitt durch ein Schneidelement, in dessen Matrix Schleifmittelpartikel und stabförmige Schmiermittelstrukturen eingebunden sind;
- Fig. 3b: eine schematische Draufsicht auf die Schneidfläche des in Fig. 3a gezeigten Schneidelements;
- Fig. 4a: einen schematischen Querschnitt durch ein Schneidelement, in dessen Schleifpartikel umfassende Matrix eine unregelmäßige, netzwerkförmige Schmiermittelstruktur eingebunden ist,
- Fig. 4b: eine schematische Draufsicht auf die Schneidfläche des in Fig. 4a gezeigten Schneidelements;
- Fig. 5a: einen schematischen Querschnitt durch ein Schneidelement, in dessen Schleifpartikel umfassende Matrix eine regelmäßige, netzwerkförmige Schmiermittelstruktur eingebunden ist;
- Fig. 5b: eine schematische Draufsicht auf die Schneidfläche des in Fig. 5a gezeigten Schneidelements; und
- Fig. 6: einen schematischen Querschnitt durch ein Schneidelement, in dessen Matrix Schleifmittelpartikel und plättchenförmige, Perforationen aufweisende Schmiermittelstrukturen eingebunden sind;
- Fig. 7: eine schematische Draufsicht auf eine Trennscheibe mit erfindungsgemäßen Schneidsegmenten;
- Fig. 8a: eine schematische perspektivische Ansicht eines Hohlbohrers mit einer erfindungsgemäßen Scheidlippe;
- Fig. 8b: eine schematische Draufsicht auf die Schneidfläche der Schneidlippe des in Fig. 8a gezeigten Bohrers;
- Fig. 9: eine schematische Draufsicht auf eine Trennscheiben mit einem erfindungsgemäßen geschlossenen/ebenen Schneidrand;
- Fig. 10: eine schematische Draufsicht auf eine Trennscheiben mit einem erfindungsgemäßen Turbo-Schneidrand;
- Fig. 11: einen schematischen Querschnitt durch eine Trennscheibe mit einem erfindungsgemäßen Turbo-Schneidrand; und
- Fig. 12: eine schematische, perspektivische Ansicht eines Hohlbohrers mit einer Beschichtung aus einer erfindungsgemäßen Zusammensetzung.

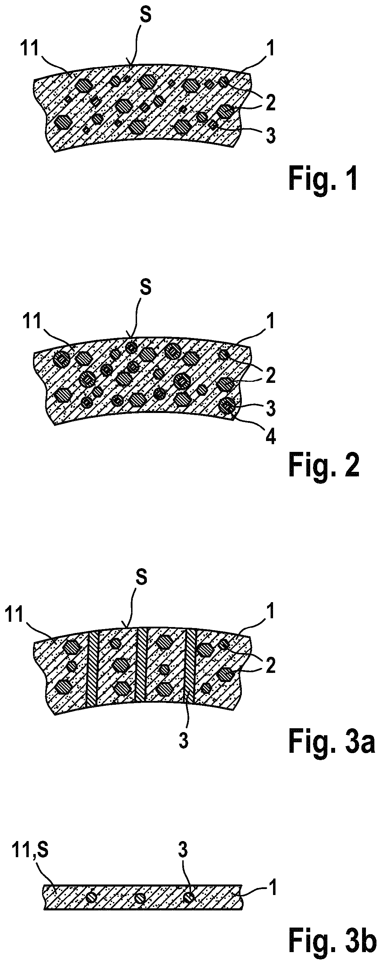

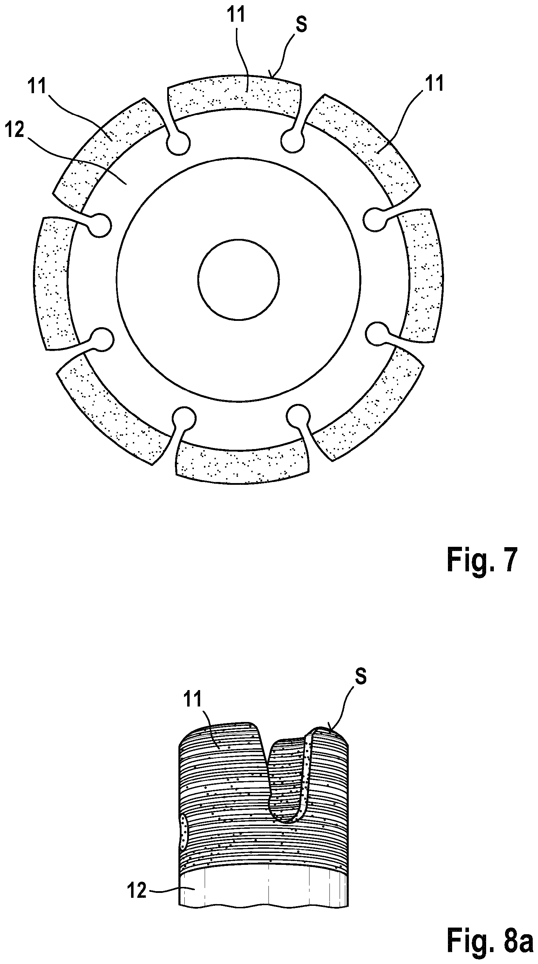

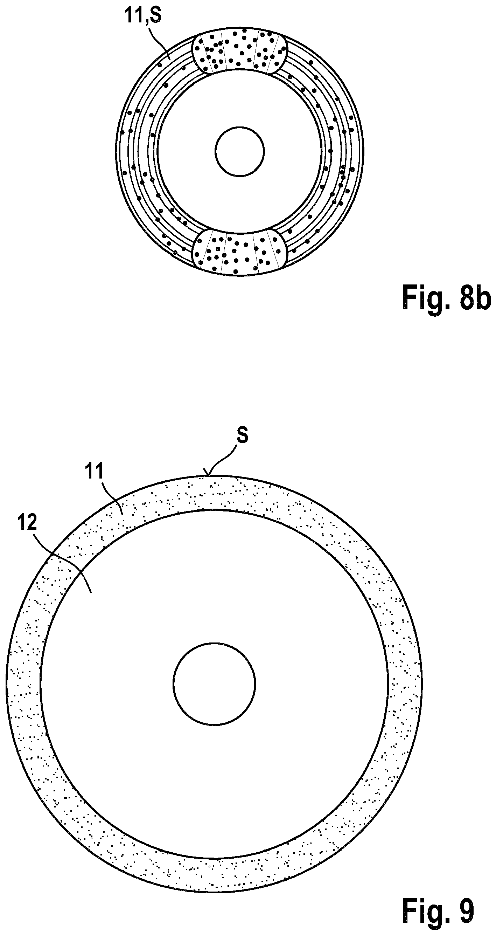

Figur 1 zeigt einen schematischen Querschnitt durch ein dem besseren Verständnis dienendes Beispiel eines Schneidelements 11. Die geschwungenen Begrenzungslinien veranschaulichen, dass es sich hierbei sowohl um ein, in Fig. 7 gezeigtes Schneidsegment als auch um einen, in Fig. 9, 10, 11 oder 12 gezeigten Schneidrand eines Spanwerkzeugs, wie einer eine Trennscheibe, handeln kann. Dabei kann das Scheidelement 11 eine gestreckte, bogenartig gekrümmte Form aufweisen, deren Krümmung im Wesentlichen zum zirkulären Umfang des Spanwerkzeugs beziehungsweise des Trägerkörpers des Spanwerkzeugs korrespondiert. Figur 1 zeigt, dass eine Fläche des Scheidelements, die so genannte Schneidfläche, S zum Schneiden des zu bearbeitenden Werkstücks vorgesehen ist. Gegenüberliegend zur Scheidfläche S weist das Scheidelement 11 eine Befestigungsseite auf mit welcher es an einem Trägerkörper 12 eines Spanwerkzeugs befestigbar ist.

Figur 1 veranschaulicht, dass das Schneidelement 11 eine Matrix 1 umfasst, in die Schleifpartikel 2 und Schmiermittelstrukturen 3 eingebunden sind.

Im Rahmen des in Figur 1 gezeigten, dem besseren Verständnis dienenden Beispiels sind die Schmiermittelstrukturen 3 im Wesentlichen sphärisch ausgebildet.

Das in Figur 2 gezeigte, dem besseren Verständnis dienende Beispiel eines Schneidelements 11 unterscheidet sich im Wesentlichen dadurch von dem in Figur 1 gezeigten Beispiel, dass die Schmiermittelstrukturen 3 jeweils eine Haftvermittlerbeschichtung 4 aufweisen. Durch die Haftvermittlerbeschichtung kann insbesondere die Anbindung beziehungsweise Einbindung der Schmiermittelstrukturen 3 in die Matrix 1 verbessert werden. So kann vorteilhafterweise vermieden werden, dass die Schmiermittelstrukturen 3 beim Betrieb aus der Matrix 1 herausgerissen werden.

Die in den Figuren 3a und 3b gezeigte Ausführungsform eines Schneidelements 11 unterscheidet sich im Wesentlichen dadurch von den in Figur 1 und 2 gezeigten Beispielen, dass die Schmiermittelstrukturen 3 stabförmig ausgebildet sind. Dabei bildet jeweils ein Bereich einer stabförmigen Schmiermittelstruktur 3 einen Abschnitt der Schneidfläche S des Schneidelements 11 aus, wobei ein anderer Bereich derselben stabförmigen Schmiermittelstruktur 3 in die Matrix 1 eingebunden ist. Insbesondere erstrecken sich dabei die stabförmigen Schmiermittelstrukturen 3 von der Befestigungsseite des Schneidelements 11 in Richtung auf die Schneidfläche S des Schneidelements 11. Dabei sind die stabförmigen Schmiermittelstrukturen 3 derart ausgerichtet, dass ihre Hauptachse die Schneidfläche S des Schneidelements 11 schneidet. Auf diese Weise kann vorteilhafterweise eine kontinuierliche Bereitstellung von Schmiermittel während des Abtrags der Schneidfläche S des Scheidelements 11 gewährleistet werden.

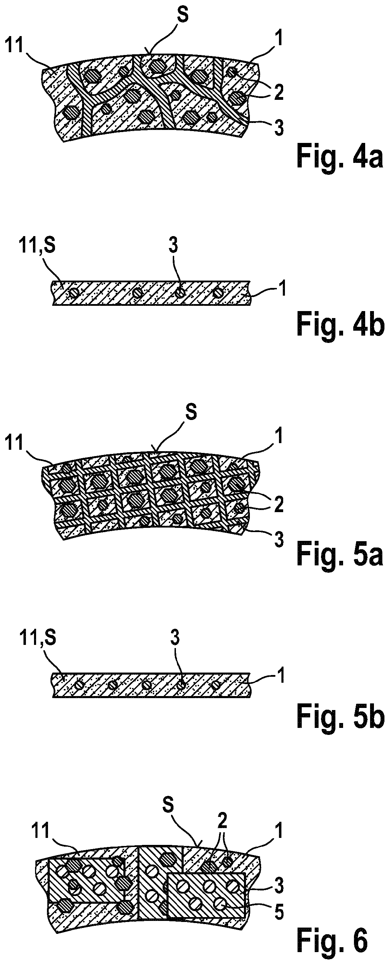

Die in den Figuren 4a und 4b gezeigte Ausführungsform eines Schneidelements 11 unterscheidet sich im Wesentlichen dadurch von der in den Figuren 3a und 3b gezeigten Ausführungsform, dass das Schneidelement 11 eine unregelmäßige, netzwerkförmige Schmiermittelstruktur 3 umfasst, welche in Form eines, in der Matrix 1 ausgebildeten, Schmiermittel 3 gefüllten Kanal- und/oder Porennetzwerks ausgebildet ist.

Die in den Figuren 5a und 5b gezeigte Ausführungsform eines Schneidelements 11 unterscheidet sich im Wesentlichen dadurch von der in den Figuren 4a und 4b gezeigten Ausführungsform, dass das Schneidelement 11 eine regelmäßige, netzwerkförmige Schmiermittelstruktur 3 umfasst, welche in Form eines, in der Matrix 1 ausgebildeten, Schmiermittel 3 gefüllten Kanal- und/oder Porennetzwerks ausgebildet ist.

Die in den Figuren 6a und 6b gezeigte Ausführungsform eines Schneidelements 11 unterscheidet sich im Wesentlichen dadurch von der in den Figuren 1 und 2 gezeigten Beispielen und den in Fig. 3a bis 5b gezeigten Ausführungsformen, dass das Schneidelement 11 plättchenförmige Schmiermittelstrukturen 3 umfasst, welche jeweils mehrere Perforationen 5 aufweisen. Durch diese Perforationen 5 können die Matrixbereiche 1, welche jeweils an gegenüberliegende Seiten der plättchenförmigen Schmiermittelstruktur 3 angrenzen miteinander verbunden sein und so vorteilhafterweise die Festigkeit des Schneidelements 11 erhöhen.

Figur 7 zeigt eine schematische Draufsicht auf eine Trennscheibe, welche einen scheibenförmigen Trägerkörper 12 aufweist, mit dem acht erfindungsgemäße Schneidelemente 11 in Form von Schneidsegmente verbunden sind.

Die Figuren 8a und 8b zeigen einen Hohlbohrer, der einen im Wesentlichen zylindrischen Trägerkörper 12 und ein, mit dem Trägerkörper 12 verbundenes, erfindungsgemäßes Schneidelement 11 in Form einer Schneidlippe aufweist.

Figur 9 zeigt eine Trennscheibe, welche ebenfalls einen scheibenförmigen Trägerkörper 12 und ein mit dem Trägerkörper 12 verbundenes, erfindungsgemäßes Schneidelement 12 in Form eines geschlossenen beziehungsweise ebenen Schneidrands aufweist.

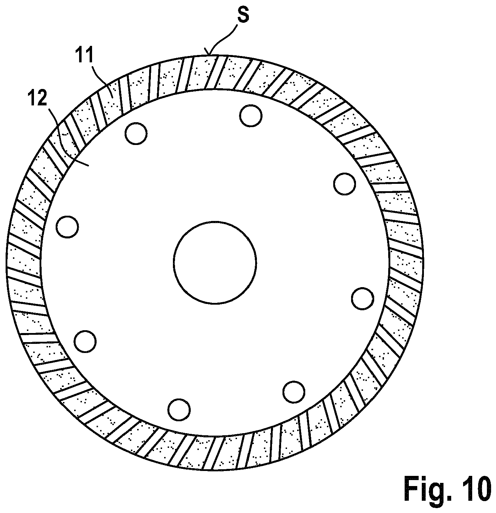

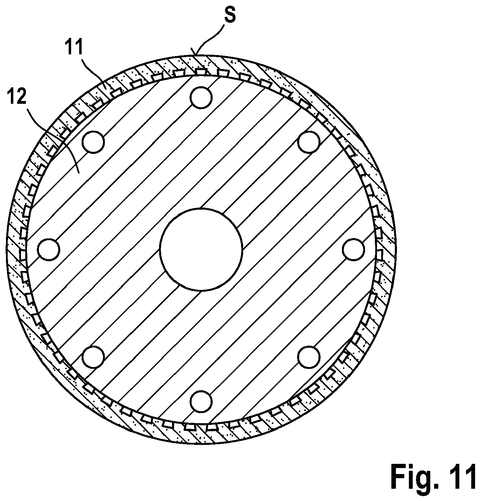

Die Figuren 10 und 11 zeigen Trennscheiben, welche ebenfalls einen scheibenförmigen Trägerkörper 12 und ein mit dem Trägerkörper 12 verbundenes, erfindungsgemäßes Schneidelement 12 in Form eines strukturierten Schneidrand, eines so genannter Turbo-Schneidrands, aufweisen. Figur 11 veranschaulicht, dass das Schneidelement 12 durch ein Kalt- und/oder Warmverfestigungsverfahren, insbesondere Kalt- und/oder Heißpressen, mit zahnartigen Strukturen, welche umfänglich am scheibenförmigen Trägerkörper 12 ausgebildet sind, verbunden ist.

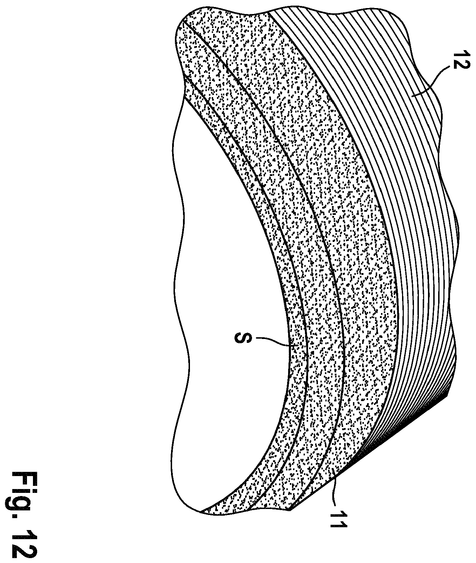

Figur 12 zeigt einen Hohlbohrer, der einen im Wesentlichen hohlzylinderförmigen Trägerkörper 12 aufweist. Figur 12 veranschaulicht, dass ein Öffnungsbereich des hohlzylinderförmigen Trägerkörpers 12 mit einer Beschichtung aus einer erfindungsgemäßen Zusammensetzung versehen ist, welche eine Matrixkomponente, eine Schleifmittelkomponente und eine Haftvermittler beschichtete Schmiermittelkomponente umfasst.

### Beispiele:

### Beispiel 1: sphärische Graphitpartikel als Schmiermittelkomponente

2,32 kg Eisen, 0,40 kg Nickel, 0,80 kg Bronze(CuSn 80/20) und 0,48 kg Wolframcarbid wurden, jeweils als Pulver mit einer durchschnittlichen Partikelgröße von etwa 30 µm, in einem Turbula® Mischer der Firma WAB zusammen gegeben und 4 Stunden lang mit 72 rpm unter Verwendung von Wolframcarbid-Cobalt-Kugeln mit einem Durchmesser von 6,3 mm trocken gemischt.

Die resultierende Matrixkomponente wurde in einen ersten Teil von 3,936 kg und einen zweiten Teil von 0,064 kg aufgeteilt.

Zu dem ersten Matrixkomponententeil (3,936 kg) wurde eine Bindemittellösung (20 g Mowital® B 30H gelöst in 500 ml Isopropanol) zugegeben und die Mischung unter Ausbildung eines Granulats mit einer durchschnittlichen Partikelgröße von etwa 0,8 mm gemischt. Danach wurde das resultierende Matrixkomponenten-Granulat bei 100 °C getrocknet.

Getrennt davon wurden 0,064 kg Diamant-Pulver (40/50 Mesh) mit dem zweiten Matrixkomponententeil (0,064 kg) zunächst trocken gemischt. Anschließend wurde eine Bindemittellösung (0,64 g Mowital® B 30H gelöst in 100 ml Isopropanol) zugegeben und die Mischung unter Ausbildung eines Granulats mit einer durchschnittlichen Partikelgröße von etwa 0,8 mm gemischt. Danach wurde das resultierende Schleifmittel/Matrixkomponenten-Granulat bei 100 °C getrocknet.

Danach wurden 2 kg Matrixkomponenten-Granulat mit 128 g Schleifmittel/Matrixkomponenten-Granulat und 107 g Graphitpulver (40/140 Mesh) zur Herstellung einer Schmiermittel/Schleifmittel/Matrixkomponenten-Mischung 15 Minuten lang mit einem Turbula® Mischer mit 34 rpm gemischt.

Anschließend wurden Schneidsegmentformen jeweils derart teilweise mit 1,41 g Matrixkomponenten-Granulat und teilweise mit 2,46 g Schmiermittel/Schleifmittel/Matrixkomponenten-Mischung gefüllt, dass der mit dem Matrixkomponenten-Granulat gefüllte Bereich später als Befestigungsbasis für das herzustellende Schneidsegment dienen kann.

Durch Kaltpressen mit einem Gewicht von 4800 kg (200 MPa) und einer Pressdauer von 6 s wurden auf diese Weise 16 Schneidsegment-Grünkörper hergestellt.

Die Schneidsegment-Grünkörper wurden dann in Graphitformen entsprechend dem folgenden Programm heißverpresst und mit einem Trennscheiben-Trägerkörper aus Stahl verschweißt.

| | Druck [kg/cm²] | Starttemperatur [°C] | Endtemperatur [°C] | Zeit [s] |
|---|---|---|---|---|
| 1. Aufheizphase | 75 | RT (∼20) | 400 | 60 |
| Bindemittelentfernungsphase | 75 | 400 | 400 | 180 |
| 2. Aufheizphase | 75 | 400 | 850 | 60 |
| Sinterphase | 325 | 850 | 850 | 180 |
| Abkühlphase | 325 | 850 | 550 | 120 |

### Beispiel 2: sphärische Partikel aus hexagonalem Bornitrid (hBN) als Schmiermittelkomponente

Eine weitere Trennscheibe wurde analog zu Beispiel 1 hergestellt, wobei jedoch anstelle des Graphitpulvers ein Pulver aus hexagonalem Bornitrid eingesetzt wurde.

### Beispiel 3: sphärische, mit Nickel beschichtete Graphitpartikel als Schmiermittelkomponente

Eine weitere Trennscheibe wurde analog zu Beispiel 1 hergestellt, wobei jedoch anstelle des Graphitpulvers ein Pulver aus Nickel beschichteten Graphitpartikeln eingesetzt wurde.

### Beispiel 4: sphärische, mit Silber beschichtete Partikel aus hexagonalem Bornitrid (hBN) als Schmiermittelkomponente

Eine weitere Trennscheibe wurde analog zu Beispiel 1 hergestellt, wobei jedoch anstelle des Graphitpulvers ein Pulver aus Silber beschichteten Partikeln aus hexagonalem Bornitrid eingesetzt wurde.

### Beispiel 5: Graphitstäbchen als zusätzliche Schmiermittelkomponente

Ein Matrixkomponenten-Granulat und eine Schmiermittel/Schleifmittel/Matrixkomponenten-Mischung wurden entsprechend Beispiel 1 hergestellt. Anschließend wurden die Schneidsegmentformen jeweils derart teilweise mit 0,71 g Matrixkomponenten-Granulat und teilweise mit 1,23 g Schmiermittel/Schleifmittel/Matrixkomponenten-Mischung gefüllt, dass der mit dem Matrixkomponenten-Granulat gefüllte Bereich später als Befestigungsbasis für das herzustellende Schneidsegment dienen kann. Durch Kaltpressen mit einem Gewicht von 1200 kg (50 MPa) und einer Pressdauer von 3 s wurde eine Schicht vorgepresst. Auf die vorgepresste Schicht wurden 13 g Graphit-Stäbe mit einer durchschnittlichen Länge von 6 mm und einem durchschnittlichen Durchmesser von 1 mm aufgelegt und die Anordnung erneut mit einem Gewicht von 100 kg (∼4 MPa) und einer Pressdauer von 3 s kaltgepresst. Anschließend wurden weitere 0,71 g Matrixkomponenten-Granulat und 1,23 g Schmiermittel/Schleifmittel/Matrixkomponenten-Mischung derart in die Schneidsegmentformen eingefüllt, dass der mit dem Matrixkomponenten-Granulat gefüllte Bereich später als Befestigungsbasis für das herzustellende Schneidsegment dienen kann. Die Anordnung wurde anschließend zuerst mit einem Gewicht von 1200 kg (50 MPa) und einer Pressdauer von 3 s, dann mit einem Gewicht von 4800 kg (200 MPa) und einer Pressdauer von 6 s kaltgepresst. Die resultierenden Schneidsegment-Grünkörper wurden dann in Graphitformen entsprechend dem bereits erläuterten Programm heißverpresst und mit einem Trennscheiben-Trägerkörper aus Stahl verschweißt.

### Beispiel 6: Graphitplättchen als zusätzliche Schmiermittelkomponente

Eine weitere Trennscheibe wurde analog zu Beispiel 5 hergestellt, wobei jedoch anstelle der Graphitstäbchen Graphitplättchen mit einer durchschnittlichen Fläche von 5 mm x 10 mm und einer durchschnittlichen Dicke von 0,2 mm verwendet wurden.

### Beispiel 7: Netzwerkförmige Strukturen als Schmiermittelkomponente

Eine weitere Trennscheibe wurde analog zu Beispiel 5 und 6 hergestellt, wobei jedoch anstelle der Graphitstäbchen beziehungsweise -plättchen ein Polyethylen-Sieb verwendet wurde, welches sich während des Heißpressens zersetzte. Die resultierenden Hohlräume wurden anschließend mit dem unter dem Markennamen Molykote® erhältlichen Schmiermittel infiltriert.

### Beispiel 8: Graphitstäbchen als Schmiermittelkomponente

Ein Matrixkomponenten-Granulat wurde entsprechend Beispiel 1 hergestellt. Die Schneidsegmentformen wurden jeweils mit 2 g Matrixkomponenten-Granulat gefüllt. Durch Kaltpressen mit einem Gewicht von 1200 kg (50 MPa) und einer Pressdauer von 3 s wurde eine Schicht vorgepresst. Auf die vorgepresste Schicht wurden 13 g Graphit-Stäbe mit einer durchschnittlichen Länge von 6 mm und einem durchschnittlichen Durchmesser von 1 mm aufgelegt und die Anordnung erneut mit einem Gewicht von 100 kg (∼4 MPa) und einer Pressdauer von 3 s kaltgepresst. Anschließend wurden weitere 2 g Matrixkomponenten-Granulat in die Schneidsegmentformen eingefüllt. Die Anordnung wurde anschließend zuerst mit einem Gewicht von 1200 kg (50 MPa) und einer Pressdauer von 3 s, dann mit einem Gewicht von 4800 kg (200 MPa) und einer Pressdauer von 6 s kaltgepresst. Die resultierenden Schneidsegment-Grünkörper wurden dann in Graphitformen entsprechend dem bereits erläuterten Programm heißverpresst und mit einem Trennscheiben-Trägerkörper aus Stahl verschweißt.

### Beispiel 9: Graphitplättchen als Schmiermittelkomponente

Eine weitere Trennscheibe wurde analog zu Beispiel 8 hergestellt, wobei jedoch anstelle der Graphitstäbchen Graphitplättchen mit einer durchschnittlichen Fläche von 5 mm x 10 mm und einer durchschnittlichen Dicke von 0,2 mm verwendet wurden.

### Beispiel 10: Netzwerkförmige Strukturen als Schmiermittelkomponente

Eine weitere Trennscheibe wurde analog zu Beispiel 8 und 9 hergestellt, wobei jedoch anstelle der Graphitstäbchen beziehungsweise -plättchen ein Polyethylen-Sieb verwendet wurde, welches sich während des Heißpressens zersetzte. Die resultierenden Hohlräume wurden anschließend mit dem unter dem Markennamen Molykote® erhältlichen Schmiermittel infiltriert.

Schnittversuche mit den auf diese Weise hergestellten Trennscheiben zeigten, dass die Trennscheiben einen geringen Geräuschpegel und eine geringe Erhitzung aufweisen.

## Patentansprüche

1. Zusammensetzung für ein Schneidelement (11), insbesondere eines Spanwerkzeugs, umfassend
- mindestens eine Matrixkomponente (1),
- mindestens eine Schleifmittelkomponente (2) und
- mindestens ein Schmiermittelkomponente (3),
wobei die Schmiermittelkomponente (3) zumindest teilweise in Strukturen (3) ausgebildet ist, welche jeweils eine Haftvermittlerbeschichtung (4) aufweisen, **dadurch gekennzeichnet, dass** die Schmiermittelkomponente (3) zumindest teilweise oder vollständig in Strukturen (3) ausgebildet ist, welche ausgewählt sind aus der Gruppe bestehend aus stabförmigen Strukturen, plättchenförmigen Strukturen, gitterförmigen Strukturen und Mischungen davon, wobei die gitterförmigen Strukturen einen Spezialfall der plättchenförmigen Strukturen mit jeweils einer oder mehreren Perforationen bilden.

2. Zusammensetzung nach Anspruch 1, wobei die Matrixkomponente (1) eine anorganische Matrixkomponente ist.

3. Zusammensetzung nach Anspruch 1 oder 2, wobei die Zusammensetzung
- ≥ 30 Gew.-% bis ≤ 95 Gew.-%, insbesondere ≥ 30 Gew.-% bis ≤ 90 Gew.-%, an Matrixkomponenten (1),
- ≥ 2 Gew.-% bis ≤ 20 Gew.-%, insbesondere ≥ 3 Gew.-% bis ≤ 15 Gew.-%, an Schleifmittelkomponenten (2),
- ≥ 1 Gew.-% bis ≤ 30 Gew.-%, insbesondere ≥ 2 Gew.-% bis ≤ 20 Gew.-%, an Schmiermittelkomponenten (3), und
- ≥ 1 Gew.-% bis ≤ 30 Gew.-%, insbesondere ≥ 2 Gew.-% bis ≤ 20 Gew.-%, an Haftvermittlern (4),
bezogen auf das Gesamtgewicht der Zusammensetzung, umfasst.

4. Zusammensetzung nach einem der Ansprüche 1 bis 3, wobei die Schmiermittelkomponente (3) zumindest teilweise in Strukturen (3) ausgebildet ist, welche ausgewählt sind aus der Gruppe bestehend aus sphärischen Strukturen, stabförmigen Strukturen, plättchenförmigen Strukturen, gitterförmigen Strukturen und Mischungen davon.

5. Zusammensetzung nach einem der Ansprüche 1 bis 4, wobei die Schmiermittelkomponente (3) zumindest teilweise in plättchenförmigen Strukturen (3) ausgebildet ist, welche jeweils eine oder mehrere Perforationen (5) aufweisen.

6. Zusammensetzung nach einem der Ansprüche 1 bis 5, wobei die Schmiermittelkomponente (3) ausgewählt ist aus der Gruppe, bestehend aus anorganischen Schmiermitteln, insbesondere Nitriden, Sulfiden, Fluoriden, Sulfaten, Oxiden, Carbiden, Iodiden und/oder Boraten von Bor, Wolfram, Molybdän, Calcium, Barium, Magnesium, Strontium, Cäsium, Natrium, Kalium, Titan, Silicium, Cer, Silber und/oder Mangan, Kohlenstoffmodifikationen, wie Graphit, Graphen und/oder Kohlenstoffnanoröhren, und Mischungen davon.

7. Zusammensetzung nach einem der Ansprüche 1 bis 6, wobei die Matrixkomponente (1) ausgewählt ist aus der Gruppe, bestehend aus metallischem Kupfer, Zinn, Eisen, Cobalt, Nickel, Titan, Chrom, Wolfram und/oder Mangan, Metalllegierungen von Kupfer, Zinn, insbesondere Bronze, Eisen, Cobalt, Nickel, Titan, Chrom, Wolfram und/oder Mangan, anorganischen Verbindungen von Titan, Chrom, Wolfram und/oder Mangan und Mischungen davon.

8. Zusammensetzung nach einem der Ansprüche 1 bis 7, wobei die Schleifmittelkomponente (2) ausgewählt ist aus der Gruppe, bestehend aus Diamant, kubischem Bornitrid, Wolframkarbid, Titancarbid, Titannitrid, Siliciumcarbid und Mischungen davon, wie Titanwolframcarbide oder Titancarbidnitride, insbesondere Diamant.

9. Verfahren zur Herstellung eines Schneidelements oder eines Spanwerkzeugs, wobei eine Zusammensetzung nach einem der Ansprüche 1 bis 8, insbesondere durch Kaltverfestigen und/oder Warmverfestigen, insbesondere Kalt- und/oder Heißpressen, verfestigt wird.

10. Schneidelement aus einer Zusammensetzung nach einem der Ansprüche 1 bis 8, insbesondere hergestellt durch ein Verfahren nach Anspruch 9.

11. Schneidelement nach Anspruch 10, wobei das Schneidelement ein Schneidsegment, ein Schneidrand, eine Schneidlippe, eine Schneidspitze oder ein Schneidbelag ist.

12. Spanwerkzeug, umfassend mindestens ein Schneidelement nach Anspruch 10 oder 11.

13. Spanwerkzeug nach Anspruch 12, wobei das Spanwerkzeug einen Trägerkörper aufweist, mit welchem das mindestens eine Schneidelement verbunden ist.

14. Spanwerkzeug nach Anspruch 12 oder 13, wobei das Spanwerkzeug ein Sägeblatt, eine Trennscheibe, ein Bohrer, ein Senker, eine Fräse, eine Ahle, ein Meißel, eine Schleifscheibe, ein Schleifteller, ein Schleifklotz, ein Schleifband, eine Schleifwalze, eine Feile, eine Raspel, eine Reibe oder ein Hobel ist.

## Claims

1. Composition for a cutting element (11), in particular of a chip-removing tool, comprising
- At least one matrix component(1),
- At least one grinding component(2) and
- At least one lubricant component(3),
wherein the lubricant component(3) is at least partially formed in structures (3), which each have an adhesion-promoting coating (4), **characterized in that** the lubricant component (3) is formed at least partially or entirely in structures (3) which are chosen from the group consisting of rod-shaped structures, platelet-shaped structures, grid-shaped structures and mixtures thereof, wherein the grid-shaped structures form a special case of the platelet-shaped structures with in each case one or more perforations.

2. Composition according to Claim 1, wherein the matrix component (1) is an inorganic matrix component.

3. Composition according to Claim 1 or 2, wherein the composition comprises
- ≥30wt% to ≤95wt%, in particular ≥30wt% to ≤90wt% of matrix components (1),
- ≥2wt% to ≤20wt%, in particular ≥3wt% to ≤15wt% of grinding components (2),
- ≥1wt% to ≤30wt%, in particular ≥2wt% to ≤20wt% of lubricant components (3), and
- ≥1wt% to ≤30wt%, in particular ≥2wt% to ≤20wt% of adhesion-promoters(4),
based on the total weight of the composition.

4. Composition according to one of Claims 1 to 3, wherein the lubricant component (3) is at least partially formed in structures (3) which are chosen from the group consisting of spherical structures, rod-shaped structures, platelet-shaped structures, grid-shaped structures and mixtures thereof.

5. Composition according to one of Claims 1 to 4, wherein the lubricant component (3) is at least partially formed in platelet-shaped structures (3) which in each case have one or more perforations (5).

6. Composition according to one of Claims 1 to 5, wherein the lubricant component (3) is chosen from the group consisting of inorganic lubricants, in particular nitrides, sulphides, fluorides, sulphates, oxides, carbides, iodides and/or borates of boron, tungsten, molybdenum, calcium, barium, magnesium, strontium, caesium, sodium, potassium, titanium, silicon, cerium, silver and/or manganese, carbon allotropes such as graphite, graphene and/or carbon nanotubes, and mixtures thereof.

7. Composition according to one of Claims 1 to 6, wherein the matrix component (1) is chosen from the group consisting of metallic copper, tin, iron, cobalt, nickel, titanium, chromium, tungsten and/or manganese, metal alloys of copper, tin, in particular bronze, iron, cobalt, nickel, titanium, chromium, tungsten and/or manganese, inorganic compounds of titanium, chromium, tungsten and/or manganese and mixtures thereof.

8. Composition according to one of Claims 1 to 7, wherein the grinding component (2) is chosen from the group consisting of diamond, cubic boron nitride, tungsten carbide, titanium carbide, titanium nitride, silicon carbide and mixtures thereof such as titanium tungsten carbides or titanium carbonitrides, in particular diamond.

9. Method for producing a cutting element or a chip-removing tool, wherein a composition according to one of Claims 1 to 8 is bonded, in particular by cold-bonding and/or hot-bonding,in particular cold-pressing and/or hot-pressing.

10. Cutting element of a composition according to one of Claims 1 to 8, in particular produced by a method according to Claim 9.

11. Cutting element according to Claim 10, wherein the cutting element is a cutting segment, a cutting rim, a cutting lip, a cutting tip or a cutting coating.

12. Chip-removing tool, comprising at least one cutting element according to Claim 10 or 11.

13. Chip-removing tool according to Claim 12, wherein the chip-removing tool has a supporting body with which the at least one cutting element is connected.

14. Chip-removing tool according to Claim 12 or 13, wherein the chip-removing tool is a saw blade, a cutting disk, a drill bit, a countersink cutter, a milling cutter, a broach, a chisel, a grinding wheel, a grinding disk, a grinding pad, a grinding strip, a grinding roller, a file, a rasp, a reamer or a plane.

## Revendications

1. Composition pour un élément de coupe (11), en particulier d'un outil d'enlèvement de copeaux, comprenant
- au moins une composante de matrice (1),
- au moins une composante abrasive (2) et
- au moins une composante de lubrifiant (3) la composante de lubrifiant (3) étant réalisée au moins partiellement dans les structures (3), qui présentent à chaque fois un revêtement promoteur d'adhésion (4), **caractérisée en ce que**
la composante de lubrifiant (3) est réalisée au moins en partie ou complètement dans des structures (3) qui sont choisies parmi le groupe constitué de structures en forme de barre, de structures en forme de plaquette, de structures en forme de grille et de mélanges de celles-ci, les structures en forme de grille formant un cas particulier des structures en forme de plaquette, avec à chaque fois une ou plusieurs perforations.

2. Composition selon la revendication 1, la composante de matrice (1) étant une composante de matrice inorganique.

3. Composition selon la revendication 1 ou 2, la composition comprenant
- ≥ 30 %-poids à ≤ 95 %-poids, en particulier ≥ 30 %-poids à ≤ 90 %-poids de composantes de matrice (1),
- ≥ 2 %-poids à ≤ 20 %-poids, en particulier ≥ 3 %-poids à ≤ 15 %-poids de composantes abrasives (2),
- ≥ 1 %-poids à ≤ 30 %-poids, en particulier ≥ 2 %-poids à ≤ 20 %-poids de composantes de lubrifiant (3), et
- ≥ 1 %-poids à ≤ 30 %-poids, en particulier ≥ 2 %-poids à ≤ 20 %-poids d'agents promoteurs d'adhésion (4),
rapportées au poids total de la composition.

4. Composition selon l'une des revendications 1 à 3, la composante de lubrifiant (3) étant réalisée au moins partiellement dans des structures (3) qui sont sélectionnées parmi le groupe composé de structures sphériques, de structures en forme de barre, de structures en forme de plaquette, de structures en forme de grille et leurs mélanges.

5. Composition selon l'une des revendications 1 à 4, la composante de lubrifiant (3) étant configurée au moins partiellement dans les structures en forme de plaquette (3) qui présentent respectivement une ou plusieurs perforations (5).

6. Composition selon l'une des revendications 1 à 5, la composante de lubrifiant (3) étant sélectionnée parmi le groupe composé de lubrifiants inorganiques, en particulier des nitrures, sulfures, fluorures, sulfates, oxydes, carbures, iodures et/ou des borates de bore, tungstène, molybdène, calcium, baryum, magnésium, strontium, césium, sodium, potassium, titane, silicium, cérium, argent et/ou manganèse, des variétés de carbone telles que graphite, graphènes et/ou nanotubes de carbone, et leurs mélanges.

7. Composition selon l'une des revendications 1 à 6, la composante de matrice (1) étant sélectionnée dans le groupe composé de cuivre, étain, fer, cobalt, nickel, titane, chrome, tungstène et/ou manganèse métallique, d'alliages métalliques de cuivre, d'étain, en particulier de bronze, de fer, de cobalt, de nickel, de titane, de chrome, de tungstène et/ou de manganèse, de composés inorganiques de titane, de chrome, de tungstène et/ou de manganèse, et de leurs mélanges.

8. Composition selon l'une des revendications 1 à 7, la composante abrasive (2) étant sélectionnée dans le groupe composé de diamant, nitrure de bore cubique, carbure de tungstène, carbure de titane, nitrure de titane, carbure de silicium et leurs mélanges tels que carbures de titane-tungstène ou carbonitrures de titane, en particulier le diamant.

9. Procédé de fabrication d'un élément de coupe ou d'un outil d'enlèvement de copeaux, une composition selon l'une des revendications 1 à 8 étant durcie, en particulier par durcissement à froid et/ou durcissement à chaud, en particulier par pression à froid et/ou pression à chaud.

10. Elément de coupe ayant une composition selon l'une des revendications 1 à 8, en particulier fabriqué par un procédé selon la revendication 9.

11. Elément de coupe selon la revendication 10, l'élément de coupe étant un segment de coupe, un bord de coupe, une lèvre de coupe, une pointe de coupe ou un revêtement de coupe.

12. Outil d'enlèvement de copeaux, comprenant au moins un élément de coupe selon la revendication 10 ou 11.

13. Outil d'enlèvement de copeaux selon la revendication 12, l'outil d'enlèvement de copeaux présentant un corps de support auquel l'au moins un élément de coupe est raccordé.

14. Outil d'enlèvement de copeaux selon la revendication 12 ou 13, l'outil d'enlèvement de copeaux étant une lame de scie, un disque de coupe, un foret, un outil de lamage, une fraiseuse, une alène, un burin, un disque de meulage, un plateau de ponçage, un bloc de ponçage, une bande abrasive, un rouleau de ponçage, une lime, une râpe, un alésoir, ou un rabot.
